# DEMANDE DE BREVET EUROPEEN

(11) **EP 1 612 668 A1**
(43) Date de publication de la demande: **04.01.2006**
(21) Numéro de dépôt: 05105748.7
(22) Date de dépôt: 28.06.2005
(51) Int. Cl.: G06F 9/45

(54) **Procédé de transformation de code informatique et produit/programme d'ordinateur pour la mise en oeuvre d'un tel procédé**

(30) Priorité: 02.07.2004 FR 0407381
(71) Demandeur: THALES, 92200 Neuilly sur Seine (FR)
(72) Inventeur: Fuchs, Emmanuel, 94117 Arcueil (FR)
(74) Mandataire: Lucas, Laurent Jacques

(57) **Abrégé**

Le procédé comporte au moins :
- une première étape (11) d'acquisition d'un modèle objet de code (A) à partir du code d'origine (1) ;
- une deuxième étape (12) de transformation du modèle de code (A) en un nouveau modèle objet (B) ;
- une troisième étape (13) de génération de code (2) à partir du nouveau modèle (B).

L'invention s'applique notamment pour la transformation automatique de code existant validé, soit d'un langage dans un autre, soit en restant dans le même langage mais en modifiant le code d'origine par exemple pour en corriger les erreurs.

## Description

La présente invention concerne un procédé de transformation de code informatique. L'invention s'applique notamment pour la transformation automatique de code existant validé, soit d'un langage dans un autre, soit en restant dans le même langage mais en modifiant le code d'origine par exemple pour en corriger les erreurs. L'invention concerne également un produit/programme d'ordinateur pour la mise en oeuvre du procédé.

La production de lignes de codes produites depuis l'apparition de l'informatique est colossale. Sans remonter très loin dans le temps et en se limitant par exemple dans les quinze dernières années, une grande quantité est écrite dans un langage obsolète, du moins dans un langage pour lequel les compétences sont quasiment perdues. Par ailleurs retouches de programmes successifs, ou patchs, ont été ajoutés à la plupart de ces programmes de façon désordonnée, de sorte que l'architecture logicielle d'origine en est totalement altérée. Or, ces programmes sont toujours utilisés dans des matériels ou des systèmes existants qui doivent par ailleurs évoluer. Des évolutions logicielles sont donc nécessaires. Cependant dès qu'une évolution logicielle est proposée apparaissent des problèmes d'évolution fonctionnelle. En effet, la ou les personnes en charge des modifications ne maîtrisent pas le logiciel.
A titre d'exemple on peut considérer un système radar. Les fonctionnalités évoluent continuellement. Néanmoins, il faut conserver le matériel et les fonctions existants, donc en particulier les lignes de codes produites antérieurement. En particulier, il est impossible de réécrire les programmes qui commandent ou contrôlent les sous-ensembles. Ce code existant pose donc au moins deux problèmes, premièrement au niveau de la maintenance, deuxièmement du point de vue de l'évolution. En ce qui concerne la maintenance, étant donné que le système dans son ensemble est toujours en activité, il faut être capable le cas échéant d'intervenir dans ce code existant pour en corriger par exemple les erreurs. Cependant la connaissance ou la maîtrise du langage est perdue, ce qui complique gravement toute intervention. Pour ce qui est des évolutions, l'interfaçage avec des nouveaux programmes nécessite un minimum de maîtrise du code existant. Cela alourdit considérablement la mise en oeuvre des modifications car il faut bien souvent aller faire des modifications dans le code existant, mal connu, pour l'interfacer avec un nouveau programme.
Plus généralement en pratique, il s'agit donc de réutiliser du logiciel, disponible sous la forme d'un code source. En effet, il existe des cas de réutilisation où pour des raisons essentiellement économiques on ne peut pas jeter l'existant et tout reconstruire. Paradoxalement plus les investissements initiaux sont importants moins il est possible de revenir en arrière. Mais plus on investit plus la situation se dégrade car les bases ne sont pas saines. Il faut pouvoir revenir en arrière automatiquement pour concevoir de nouveau en fonction de l'expérience acquise. Il s'agit donc de transformer le code d'une application existante pour en changer certains éléments structurels. En effet, le code d'une application existante et opérationnelle bien que fonctionnellement valide peut nécessiter une reprise de forme pour son utilisation dans un nouveau contexte.
Parmi les nombreux cas d'utilisation de transformation de code existant on trouve par exemple :
- Les changements de règles de programmation ;
- Les acquisitions et fusions d'entreprise ;
- Les achats et ventes de technologies logicielles ;
- Les changements ou obsolescences de technologies.

En ce qui concerne les changements de règles de programmation, il s'agit soit d'application de nouvelles règles de programmation, soit de la mise en place initiale de règle de programmation alors que le code existe déjà. C'est le cas en particulier quand les contraintes de qualité du code sont renforcées pour des raisons de sûreté de fonctionnement. La transgression de règles de programmation n'empêche pas le programme de fonctionner, mais peut générer des effets de bord suite à une modification ou à un changement ultérieur des paramètres externes. Ce cas d'application sera par exemple basé sur des règles de programmation relatives à un domaine particulier. Par exemple pour des raisons de sûreté de fonctionnement certaine opérations de création dynamique d'instance sont désormais interdites, il s'agit donc rechercher et de transformer le comportement dynamique en un comportement statique.
Dans le cadre de fusions ou acquisitions d'entreprises il faut assurer une convergence des systèmes d'information. Il s'agit dans ce cas de récupérer les programmes de configuration du système d'information pour les modifier sans transgresser les règles comptables et fiscales. C'est le cas par exemple pour la configuration ERP (progiciel intégré de gestion d'entreprise). Il faut vérifier la configuration est conforme aux règles fiscales et comptables. Dans la négative il faut refaire la configuration sans compromettre la valeur des informations existantes. La principale difficulté ici est de faire les évolutions alors que le système fonctionne. En effet, tout le fonctionnement opérationnel de l'entreprise dépend de la disponibilité du système d'information. On peut également avoir le cas ou l'on change de progiciel et l'on veut récupérer la configuration de l'ancien pour configurer à l'identique le nouveau. Il faut donc définir les règles de transformation en fonction des deux progiciels.
Dans le cas de transfert de technologie, le code source des programmes ne constitue pas un réel capital, il faut pouvoir s'approprier les principes fondamentaux de la conception de la technologie. Cette phase d'appropriation commence par une mise à niveau des sources pour adapter le programme au processus de développement de l'entreprise.
Dans les cas de changements ou obsolescence de technologies, l'application existante utilise les services d'une autre application. Le code de l'application fait référence explicitement aux appels de cette application externe. En cas d'obsolescence ou de remplacement de l'application externe par une autre application il faut remplacer les invocations des services de l'ancienne application par l'invocation des services de la nouvelle application.
Les outils de « rétro-engineerie » connus imposent des opérations manuelles pour la modification des codes existants ou offrent un nombre restreint de corrections automatiques.

Un but de l'invention est notamment de permettre d'éviter des interventions manuelles et complexes, source de coûts et de problèmes supplémentaires.
A cet effet, l'invention a pour objet un procédé de transformation de code informatique, comportant au moins :
- une première étape d'acquisition d'un modèle objet de code A à partir du code d'origine ;
- une deuxième étape de transformation du modèle de code A en un nouveau modèle objet B ;
- une troisième étape de génération de code à partir du nouveau modèle B.

L'étape d'acquisition du modèle de code A comporte :
- une première étape de création d'un arbre syntaxique en fonction de la grammaire du code d'origine ;
- une deuxième étape de transformation de l'arbre syntaxique en modèle de code A.

La transformation de l'arbre syntaxique en modèle objet A utilise des règles de transformation pour représenter chaque noeud de l'arbre comme objet.
La création du modèle objet A est basée sur un méta modèle formant une grammaire décrivant les éléments structurels du langage de modélisation.
L'étape de transformation du modèle de code A comporte :
- une étape de recherche de motifs dans le modèle de code A ;
- une étape d'acquisition pour extraire les éléments d'une zone du modèle A correspondant à un motif identique ou différent d'un motif recherché ;
- une étape de transformation où les éléments extraits sont modifiés en fonction d'une règle.
   L'étape de recherche applique un gabarit de motif pour retrouver un motif dans le modèle de code A, les motifs retenus étant filtrés par le gabarit.
   Les critères de recherche portent sur la structure des blocs de programme auxquels correspond une structure de l'arbre syntaxique, la définition des motifs étant basée sur la description des structures spécifiques de l'arbre.

L'invention concerne également un produit/programme d'ordinateur pour la mise en oeuvre du procédé selon l'invention.

L'invention a pour principaux avantages qu'elle s'applique à de nombreuses applications, qu'elle est simple à mettre en oeuvre et qu'elle est économique.

D'autres caractéristiques et avantages de l'invention apparaîtront à l'aide de la description qui suit faite en regard de dessins annexés qui représentent :
- la figure 1, une illustration des principales étapes du procédé selon l'invention ;
- la figure 2, une présentation plus détaillée des étapes ;
- la figure 3, une illustration de l'étape de recherche dans la phase de transformation d'un modèle de code ;
- la figure 4, un exemple de transformation de l'arbre du modèle ;
- la figure 5, des modules composant le produit/programme d'ordinateur pour la mise en oeuvre du procédé selon l'invention.

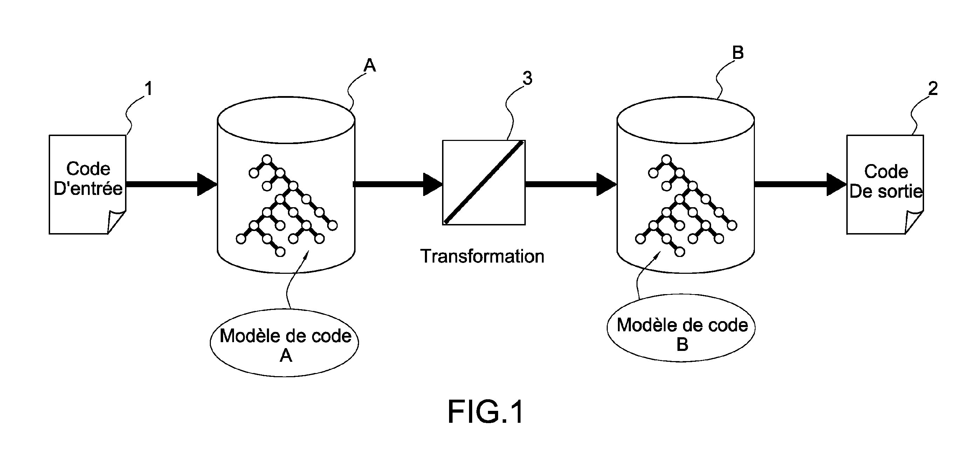

La figure 1 illustre les principales étapes d'un procédé selon l'invention dont une utilisation typique concerne par exemple la correction de défauts de mise en oeuvre des langages de programmation. Le procédé selon l'invention permet de faire la transformation automatique d'un code existant, le code d'entrée 1, soit dans un autre langage, soit en restant dans le même langage mais en modifiant le code d'origine pour par exemple en corriger les erreurs. Un nouveau code 2 est obtenu en sortie de mise en oeuvre du procédé. Cette transformation est basée sur la transformation du modèle objet du code existant, que l'on appellera par la suite modèle de code A. Le modèle de code est construit automatiquement par exemple par un compilateur. Un utilisateur définit les règles de transformation du modèle A du code existant 1 vers un nouveau modèle objet de code B à partir duquel le nouveau code 2 est généré. En fait le modèle A du code existant est par exemple défaillant et doit donc être transformé en un nouveau modèle B. Le modèle A est défaillant soit à cause d'erreurs dans le code existant 1, soit par obsolescence du code existant, soit encore par inadaptation à un nouveau matériel par exemple. L'utilisateur définit donc un programme de transformation 3 pour modifier le modèle de code A en modèle de code B. Le nouveau modèle B forme alors une nouvelle base de données à partir de laquelle il sera possible de reprogrammer le code pour obtenir le code de sortie 2.
La figure 1 illustre donc trois étapes du procédé selon l'invention, à savoir l'acquisition du modèle de code A, la transformation automatique du modèle de code A en un modèle de code B corrigé et la génération automatique de code 2 à partir de ce nouveau modèle de code B. Une étape préliminaire est l'écriture des règles de transformation.

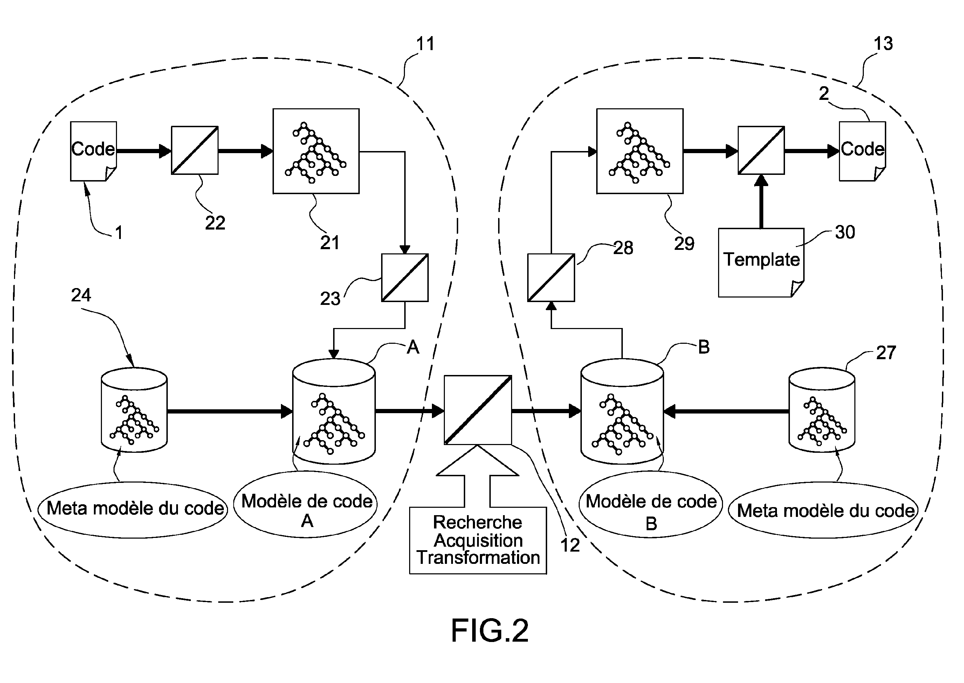

La figure 2 illustre plus précisément ces étapes du procédé selon l'invention, une étape 11 d'acquisition du modèle de code, une étape 11 de transformation du modèle de code et une étape 13 de génération du code de sortie.
L'acquisition du modèle de code A est donc réalisée dans une première étape 11. Selon l'invention l'acquisition du modèle de code est ascendante. En effet, un modèle est situé à un niveau d'abstraction supérieur à celui de son instance. Or dans cette étape 11, le modèle A est construit par rapport à son instance : le code. Les démarches de modélisation habituelles sont descendantes car on fait d'abord un modèle pour générer le squelette du programme. Le programmeur doit ensuite remplir manuellement le corps des procédures.
L'étape d'acquisition 11 comporte une première étape de création d'un arbre syntaxique 21. A l'intérieur de cette étape d'acquisition 11, une première phase consiste donc à analyser le code d'entrée 1. Le résultat de l'analyse est stocké dans l'arbre syntaxique 21. Cette étape est une étape connue pour la compilation du code. L'arbre syntaxique 21 est construit en fonction de la grammaire du langage, également appelée BNF en référence à l'expression anglo-saxonne « Backus-Naur Form ». En particulier, le code d'entrée est traité par une unité frontale 22, appelée dans la littérature anglo-saxonne « Front end ». Cette unité frontale 22 communique avec le fichier des spécifications du code d'entrée 1. Elle communique aussi avec un fichier décrivant la grammaire du code d'entrée. L'unité frontale 22 traite donc notamment avec deux séries de données d'entrée, celle fournie par le fichier de spécification, décrivant notamment la syntaxe du langage, et celle fournie par le fichier de grammaire. L'analyse grammaticale effectuée de façon classique par l'unité frontale 22 permet à cette dernière d'extraire les données de plus haut niveau contenues dans le fichier des spécifications et donc d'obtenir l'arbre syntaxique 21.
Une deuxième étape à l'intérieur de l'étape d'acquisition 11 consiste à transformer l'arbre syntaxique 21 en un modèle objet du code 1. En particulier, au lieu d'effectuer la suite des traitements sur la base de l'arbre syntaxique 21, comme c'est le cas par exemple pour un compilateur, selon l'invention l'arbre syntaxique 21 est transformé en modèle objet du code. Le principe de la transformation de l'arbre syntaxique 21 en modèle objet consiste notamment à définir des règles de transformation pour représenter chaque noeud de l'arbre 21 comme objet. La transformation de l'arbre syntaxique 21 en modèle de code A est effectuée par une unité fonctionnelle 23, génératrice de modèle. Le principe de la modélisation objet est notamment de définir un ensemble de classes pour représenter les concepts à modéliser. La programmation objet définit en fait un formalisme pour décrire la structure du modèle. Dans le cas de l'invention, chaque noeud de l'arbre est une instance d'une classe. Le type de classe dépend du type du contenu du noeud. A chaque instruction du langage correspond une classe. L'arbre d'héritage des classes du modèle objet de l'arbre syntaxique 21 est construit en fonction de la grammaire du langage décrite dans la BNF précitée. Les classes sont liées entre elles par un graphe d'héritage en fonction de leurs caractéristiques communes. L'arbre d'héritage peut par exemple comporter une branche pour les opérations de contrôle et d'exécution, une branche pour la gestion des sous-programmes et une branche pour les opérateurs. L'approche objet permet avantageusement d'utiliser un langage objet pour naviguer dans l'arbre. Il permet également d'utiliser des techniques d'introspection pour rechercher des structures complexes dans l'arbre. Par ailleurs, contrairement à un modèle objet issu d'une modélisation descendante manuelle, ce modèle de code A est complet. En effet, il représente un programme qui fonctionne réellement, alors que les modèles d'applications issus d'une démarche classique descendante ne sont pas complets. En effet, dans une démarche descendante, il est impossible de modéliser tous les détails de l'application. La démarche descendante nécessite l'ajout manuel de code pour correspondre à une application complète.
Le principe de la modélisation objet est basé sur la définition d'une grammaire 24 pour le langage de modélisation. Cette grammaire décrit les éléments structurels du langage de modélisation. Elle constitue le modèle de description du modèle de code A. Cette grammaire sera appelée par la suite méta modèle. Un méta modèle fournit des informations sur les modèles en général comme par exemple une légende fournit par analogie des informations sur des cartes routières. Le méta modèle définit notamment les concepts de base qui servent à décrire le modèle. Dans le cas du modèle de code A, il s'agit de la grammaire du langage, c'est-à-dire le langage BNF. En particulier, le méta-modèle peut être obtenu par compilation de la BNF du langage. En d'autres termes, selon l'invention, le langage de description de la BNF est compilé pour générer son méta modèle.
Habituellement, dans une démarche de modélisation descendante, les modèles décrivent des environnements complexes dont le méta modèle doit être écrit manuellement car les concepts manipulés sont très spécifiques. Dans l'invention, le méta modèle 24 du code définit comment représenter un langage informatique sous la forme d'un modèle. Cela correspond avantageusement à des concepts très simples dans le cas d'un compilateur.
Dans un premier temps, on obtient donc un méta modèle dédié au langage de programmation de l'application, c'est-à-dire le code d'entrée 1. Une étape suivante peut constituer à utiliser un méta modèle générique de code pour représenter de la même façon tous les langages de programmation. Il est possible de généraliser l'approche de méta modélisation pour définir un méta modèle qui s'applique à tous les langages de programmation. Cela permet notamment de générer du code à partir de la définition d'un modèle indépendant des langages de programmation, donc de générer du code dans un autre langage que le langage d'entrée, par exemple pour transformer du langage Ada en langage C.

Dans une deuxième phase 12, le modèle initial, c'est-à-dire le modèle A obtenu à partir du code d'entrée 1, est transformé. A la suite de cette transformation un deuxième modèle est obtenu par recopie avec modification du modèle initial. On appelle modèle B ce deuxième modèle. La phase de transformation du modèle initial A se décompose en plusieurs étapes 25 :
- une étape de recherche ;
- une étape d'acquisition ;
- une étape de transformation.

Ces étapes constituent un scénario de transformation. Une transformation complexe peut faire l'objet de l'exécution de plusieurs scénarios.

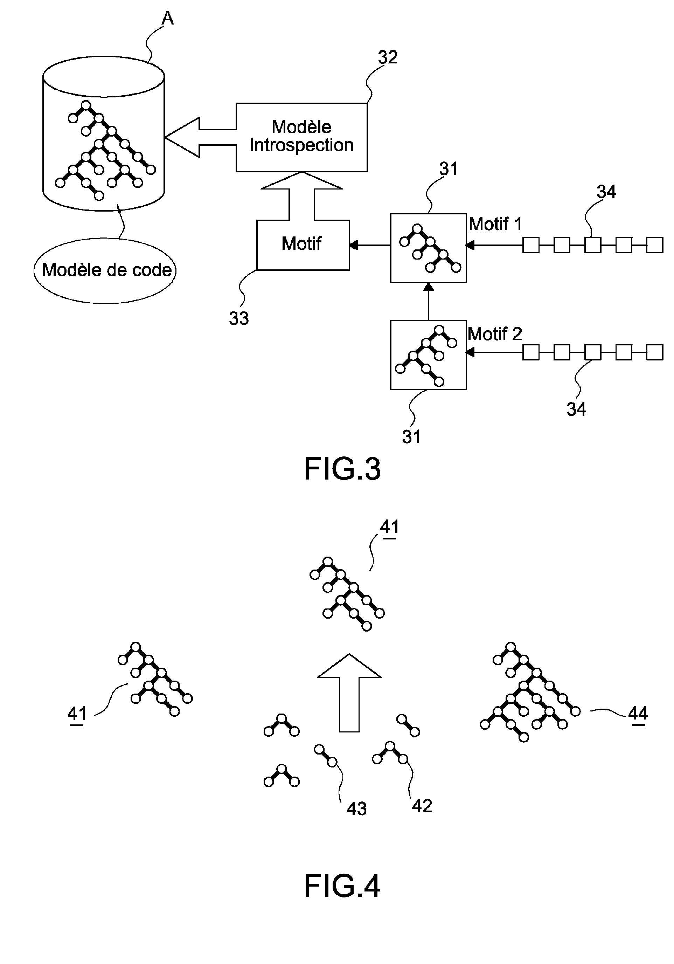

La figure 3 illustre l'étape de recherche, plus particulièrement l'introspection du modèle de code A. En particulier cette étape effectue la recherche des procédures qui ont des paramètres qui ne sont pas caractérisés, elle effectue ainsi la recherche de bugs ou de motifs.
La phase de recherche consiste par exemple à appliquer un gabarit de motif 31 pour retrouver un motif dans le modèle de code A. Un utilisateur dispose par exemple d'un langage de description de motif 32, formant modèle d'introspection du modèle de code. Le langage de recherche de motif est par exemple basé sur le méta modèle générique de code évoqué précédemment. Il possède lui-même son propre méta modèle. Chaque domaine d'application peut avoir ses propres critères de recherche. On peut constituer rapidement des bibliothèques de motifs réutilisables. Chaque description de motif peut contenir un ou plusieurs gabarits 31 qui permettent de filtrer les éléments du motif recherché. Les motifs retenus sont ainsi filtrés par le ou les gabarits. Les gabarits peuvent également contenir des prédicats 34 qui permettent de raffiner les conditions de filtrage du gabarit. On peut également construire des motifs à partir de motifs existants, comprenant des gabarits existants. On peut également définir une combinaison complexe des gabarits sous la forme d'équations. A nouveau les gabarits et leur algèbre sont définis dans un méta modèle.

Dans l'étape d'acquisition, à chaque recherche positive correspond une lecture du modèle pour extraire les éléments d'une zone du modèle A correspondant à un motif identique ou différent du motif de recherche 33. Un filtrage sur l'extraction est également défini. Il est par ailleurs possible de sauvegarder dans un tampon temporaire le résultat de l'extraction pour l'utiliser ultérieurement dans un autre scénario de transformation.

Pendant l'étape de transformation, les éléments extraits du modèle A sont alors modifiés en fonction d'une règle de transformation. La transformation est également décrite avec un langage de transformation. Ce langage est un langage déclaratif. Il définit les actions à réaliser en fonction du type des éléments extraits du modèle. Le langage de transformation est un langage à part entière pour permettre une implémentation simple et efficace, celle-ci est basée sur un méta modèle spécifique. Des transformations simples de transformation sont par exemple :
- la croissance de l'arbre syntaxique du modèle ;
- la décoration de l'arbre ;
- la substitution.

La figure 4 illustre un exemple de transformation qui est une croissance de l'arbre. La transformation consiste notamment à rajouter des éléments 42, 43 à l'arbre 41 du modèle initial, ou à une partie de l'arbre du modèle initial, pour obtenir un arbre final 44. Dans l'exemple de la figure 4, il s'agit d'une structure d'arbre à laquelle on ajoute des noeuds. Il est possible aussi de remplacer un noeud par un groupe de noeuds.

En ce qui concerne le langage de recherche de motif 32, les critères de recherche portent sur la structure des blocs du programme auxquels correspond une structure de l'arbre syntaxique. Le principe de définition des motifs est basé sur la description des structures spécifiques de l'arbre. L'organisation des noeuds de l'arbre, en fonction de leur type, permet de déterminer une configuration du code typique. Cette technique est proche de celle utilisée dans les compilateurs pour optimiser la génération du code assembleur. Selon l'invention, elle est appliquée sur le code de haut niveau, c'est-à-dire au niveau du modèle. Des techniques classiques sont ainsi utilisées d'une façon nouvelle, grâce notamment à l'utilisation de l'approche de modélisation objet. Le langage de recherche de motif peut aussi utiliser les techniques d'analyse sémantiques basées sur l'algorithmie des arbres. Par exemple pour le parcours des branches, la recherche est le plus court chemin, la recherche de boucle ou la recherche de maximum peuvent être utilisées.

Le langage de transformation utilisé permet de décrire les éléments du modèle à transformer. Toute entité du méta modèle du langage peut faire l'objet d'une transformation. Les transformations sont décrites par rapport au méta modèle et elles sont ensuite appliquées au modèle du code. Il est possible de définir des transformations endogènes qui transforment des éléments d'un méta modèle en éléments du même méta modèle et des transformations exogènes qui transforment les éléments du méta modèle de départ en éléments du méta modèle d'arrivée. En se référant à la figure 2, dans le cas d'une transformation endogène, le méta modèle 27 associé au modèle de code B est le même méta modèle que celui associé au modèle initial A. Dans le cas d'une transformation exogène, le méta modèle 27 associé au modèle de code B est le nouveau méta modèle d'arrivée. Le méta modèle 27 associé au modèle de code B décrit les éléments structurels de son langage de modélisation.

Dans une troisième phase 13 le nouveau code 2 de sortie est généré. Cette phase utilise par exemple le principe de la génération de code à base de « template » pour regénérer le code 2 de l'application, tel que décrit notamment dans la demande de brevet français n° 00 09971. Ainsi un générateur d'arbre est constitué à partir du modèle de code B. Ce générateur d'arbre 28 génère un arbre syntaxique 29. Une unité de codage 20 délivre le code de sortie 2. Cette unité de codage 20 nécessite deux séries de données, les données fournies par l'arbre syntaxique 29 et les données fournies par un fichier template 30. Ce dernier décrit notamment la façon d'utiliser les données contenues dans l'arbre syntaxique 29 et comment générer le bon code.

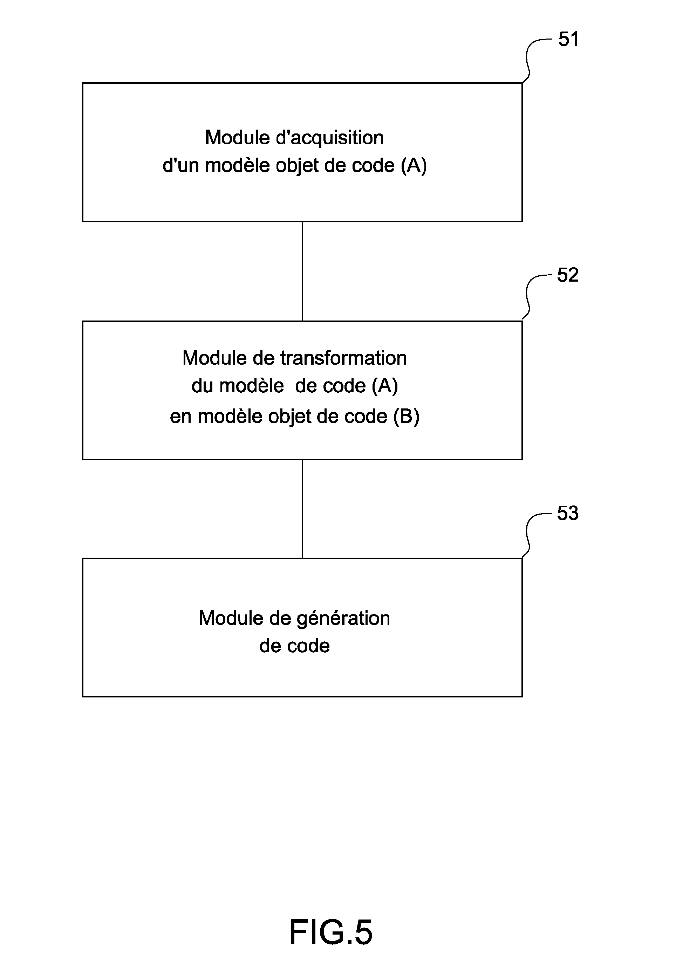

L'invention concerne également un produit/programme d'ordinateur pour la mise en oeuvre du procédé précédemment décrit. La figure 5 illustre trois principaux modules d'un tel programme. Le programme comporte un premier module 51 d'acquisition d'un modèle objet de code A correspondant au code d'origine. Ce module reprend la mise en oeuvre de la première étape 11 précédemment décrite. Le premier module 51 est interfacé avec un deuxième module 52 de transformation du modèle de code A en un nouveau modèle de code B. Ce deuxième module met en oeuvre l'étape suivante 12 du procédé selon l'invention. Enfin ce deuxième module 52 est interfacé avec un troisième module 53 de génération de code à partir du nouveau modèle B, mettant en oeuvre l'étape 13 correspondante du procédé selon l'invention. Le module 53 est par exemple celui décrit dans la demande de brevet français n° 00 09971.

L'invention peut être utilisée pour de nombreuses applications, en particulier pour la correction de défauts. Un cas d'utilisation consiste à modifier automatiquement le code pour corriger des cas d'utilisation de langages prohibés par les règles de programmation. La définition de motifs de recherche à partir, par exemple de règles de programmation, permet de garantir le respect ces règles. Certains cas de reprise de code nécessiteront plusieurs cycles, chaque cycle utilisant des jeux de règles différents. Si la qualité du code à corriger est trop mauvaise on peut appliquer plusieurs cycles de transformation avec des règles différentes, la sortie d'un cycle devenant l'entrée du cycle suivant.
La correction peut être utilisée pour le traitement des variables globales. Une variable globale est représentée par un élément lié directement à la racine du modèle. La condition de recherche est donc de rechercher tous les noeuds terminaux affiliés à la racine de l'arbre correspondant à une définition de données de type élémentaire. La variable globale est remplacée par un module qui offre deux primitives : lire et écrire. De plus, cette transformation implique de remplacer toutes les références explicites à la variable par l'appel de l'une ou l'autre des primitives « lire » et « écrire ». On décrit alors un scénario de transformation qui commence par parcourir le modèle avec un gabarit correspondant à la variable globale trouvée dans la première recherche.
L'invention peut aussi être utilisée pour remplacer du code dynamique par du code statique. Dans ce cas, il s'agit de remplacer la création dynamique de variables par la création statique basée sur de la pré-allocation de mémoire. Il s'agit de rechercher dans l'arbre des occurrences des instructions du langage qui gèrent la création de type dynamique.
Enfin l'invention est simple à mettre en oeuvre, elle ne nécessite notamment pas d'architectures complexes.

## Revendications

1. Procédé de transformation de code informatique, **caractérisé en ce qu'**il comporte au moins :
- une première étape (11) d'acquisition d'un modèle objet de code (A) à partir du code d'origine (1) ;
- une deuxième étape (12) de transformation du modèle de code (A) en un nouveau modèle objet (B) ;
- une troisième étape (13) de génération de code (2) à partir du nouveau modèle (B).

2. Procédé selon la revendication 1, **caractérisé en ce que** l'étape (11) d'acquisition du modèle de code (A) comporte :
- une première étape de création d'un arbre syntaxique (21) en fonction de la grammaire du code d'origine (1) ;
- une deuxième étape de transformation de l'arbre syntaxique (21) en modèle de code (A).

3. Procédé selon la revendication 2, **caractérisé en ce que** la transformation de l'arbre syntaxique (21) en modèle objet (A) utilise des règles de transformation pour représenter chaque noeud de l'arbre (21) comme objet.

4. Procédé selon l'une quelconque des revendications 2 ou 3, **caractérisé en ce que** la création du modèle objet (A) est basée sur un méta modèle (24) formant une grammaire décrivant les éléments structurels du langage de modélisation.

5. Procédé selon l'une quelconque des revendications précédentes, **caractérisé en ce que** l'étape (12) de transformation du modèle de code (A) comporte :
- une étape de recherche de motifs dans le modèle de code (A) ;
- une étape d'acquisition pour extraire les éléments d'une zone du modèle (A) correspondant à un motif identique ou différent d'un motif recherché ;
- une étape de transformation où les éléments extraits sont modifiés en fonction d'une règle.

6. Procédé selon la revendication 5, **caractérisé en ce que** l'étape de recherche applique un gabarit de motif (31) pour retrouver un motif dans le modèle de code (A), les motifs retenus étant filtrés par le gabarit.

7. Procédé selon l'une quelconque des revendications 5 ou 6, **caractérisé en ce que** dans le langage de recherche de motif (32), les critères de recherche portent sur la structure des blocs de programme auxquels correspond une structure de l'arbre syntaxique (21), la définition des motifs étant basée sur la description des structures spécifiques de l'arbre.

8. Procédé selon l'une quelconque des revendications 4 à 7, **caractérisé en ce que** le méta modèle associé au nouveau modèle (B) est le même que le méta modèle du modèle (A).

9. Produit/Programme d'ordinateur pour la mise en oeuvre du procédé selon l'une quelconque des revendications précédentes, **caractérisé en ce qu'**il comporte :
- un premier module (51) d'acquisition d'un modèle objet de code A correspondant au code d'origine ;
- un deuxième module (52) de transformation du modèle de code A en un nouveau modèle de code B, interfacé au module précédent (51) ;
- un troisième module (53) de génération de code à partir du nouveau modèle B.
